# EUROPEAN PATENT APPLICATION

(11) **EP 2 073 334 A2**
(43) Date of publication of application: **24.06.2009**
(21) Application number: 08172316.5
(22) Date of filing: 19.12.2008
(51) Int. Cl.: H02G 3/12

(54) **Electric installation equipment**

(30) Priority: 19.12.2007 DK 200701818
(71) Applicant: Schneider Electric Danmark A/S, 2750 Ballerup (DK)
(72) Inventor: MØller, Rune, 2880, Bagsværd (DK)
(74) Representative: Wittrup, Flemming

(57) **Abstract**

A holder (8) for a power socket (6) is configured with a locking arm (10) which is configured for being able to force a locking disc (17) down between a pair of locking beaks (14, 15) for fixating the locking beaks in a retaining rail (11). Thereby an exchange is provided between the locking arm and the locking disc to the effect that a random degree of friction and holding forces is provided between the holder (8) and the rail (11). This may further be accomplished without tools, and it is possible to establish means to ensure that erroneous mounting is avoided.

## Description

The invention concerns a holder for electrical installation equipment, eg for an power socket, for mounting in an installation duct that comprises a bottom with a retaining profile for cooperating with a resilient locking beak at the bottom of the holder, said holder having fixation means that are configured for fixating the locking beak against resilient movement transversally of the retaining profile.

An example of that type of electrical installation equipment is known from EP 0 702 441 A1 that relates to an electrical socket for being mounted in a cable duct, wherein the bottom of the cable duct has a retaining rail for cooperating with resilient locking beaks at the bottom of the power socket. By means of a screw driver it is possible to lock the locking beaks against the retaining rail.

Apart from the drawback that a tool is required for restraining the socket, the prior art is associated with the further drawback that the configuration with locking screws means that, in practice, it is not possible to set the locking beaks with a desired friction relative to the retaining rail. In practice, the known installation holder will either be fixed or released relative to the retaining rail.

The object of the invention is to provide a holder where it is possible - without the use of particular tools - to accomplish not only a free position and a locked position of the holder, but also to accomplish a smooth transition where the holder is retained against falling out of the duct, but may yet easily by pushed in the longitudinal direction of the duct with a desired friction to find its correct location in the duct.

This object is achieved in that the holder comprises a locking arm which is journalled at the bottom of the holder and extends in a direction towards the front of the holder and being connected to said fixation means to the effect that the fixation means are actuatable/deactuatable by a lateral movement of the locking arm. In this manner the locking arm replaces a particular tool for actuation of the fixation means, and, by this construction, the locking arm has a length that makes it easy to actuate/de-actuate the fixation means and to find an intermediate position in which one may shift the holder, ie adjust its position sideways, at a suitable friction, while simultaneously it is retained against falling out of the duct.

This construction also enables working, in a simple manner, with only one single retaining profile, but preferably two essentially parallel retaining profiles are provided that constitute a rail. The holder may comprise both one, but preferably two locking beaks; arresting means being provided that are configured for retaining the locking beak against resilient movement. According to the invention, the arresting means are coherent with said locking arm that extends from the bottom of the holder to the front to the effect that there is great exchange between the free manipulation end of the locking arm and the fixation means.

It is also within the framework of the invention that a holder may comprise two or more locking arms for securing heavy installation material or else to constitute the two outermost holders in each their end of a row of installation material that does not comprise locking means.

According to one embodiment the arresting means comprises a disc which is mounted preferably excentrically on a shaft which is pivotally journalled in proximity of the bottom of the holder and which is coherent with the locking arm. Preferably, the shaft extends transversally of the retaining rail when the holder is mounted in the duct; and the axial expanse of the disc increasing along a distance of its periphery, it is possible to provide gradual tightening of the locking beaks relative to the retaining rail.

The cooperation between the locking beaks and the retaining rail may be based exclusively on friction and/or the engagement of the locking beaks with a section of the retaining rail which extends essentially in parallel with the bottom of the duct. The cooperation between the locking beaks and the retaining rail may also comprise holes in the rail for cooperation with projections on a respective locking beak or comprise projections on the retaining rail for cooperation with holes in a respective locking beak. It will be understood that many options are available for varying the type of engagement between locking beaks and a retaining rail, in particular due to the very well defined control that can be obtained by means of the arresting means at the locking arm according to the invention. Usually, the installation duct comprises a front, and by one embodiment the locking arm is dimensioned such that it is able to enter behind the front only when the arresting means are actuated. This means that it is not possible to mount the front if the holder is not fixated in the duct. The front plate may also be configured in particular for cooperation with the locking arm to the effect that a corresponding measure to prevent erroneous mounting is accomplished.

According to a preferred embodiment, the holder is an adaptor for receiving various types of electrical installation equipment which may typically be a power socket. However, the invention also comprises that the locking means according to the invention are configured to be integral with eg a power socket or a wire outlet.

The invention will now be explained in further detail with reference to the following description of a number of embodiments, reference being made to the drawing, wherein:
figure 1 shows an installation duct with power sockets;
figure 2 shows an exploded view of some of the components shown in figure 1;
figure 3 shows an embodiment of the holder and the locking arm in locked position; while
figure 4 schematically illustrates cooperation between a locking arm and a front plate of the installation duct.

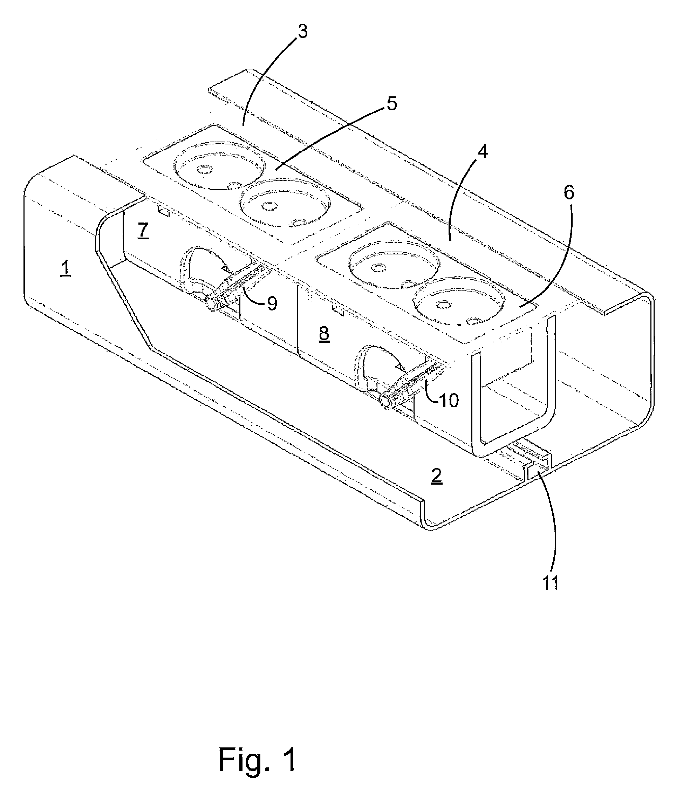

Figure 1 shows an installation duct 1 having a bottom 2 and front plates 3, 4. A part of the installation duct is cut away to the effect that it is possible to see dual power sockets 5, 6 that are arranged in respective holders 7, 8. Figure 1 also shows actuator arms 9, 10 and a retaining rail 11 which is coherent with the bottom 2.

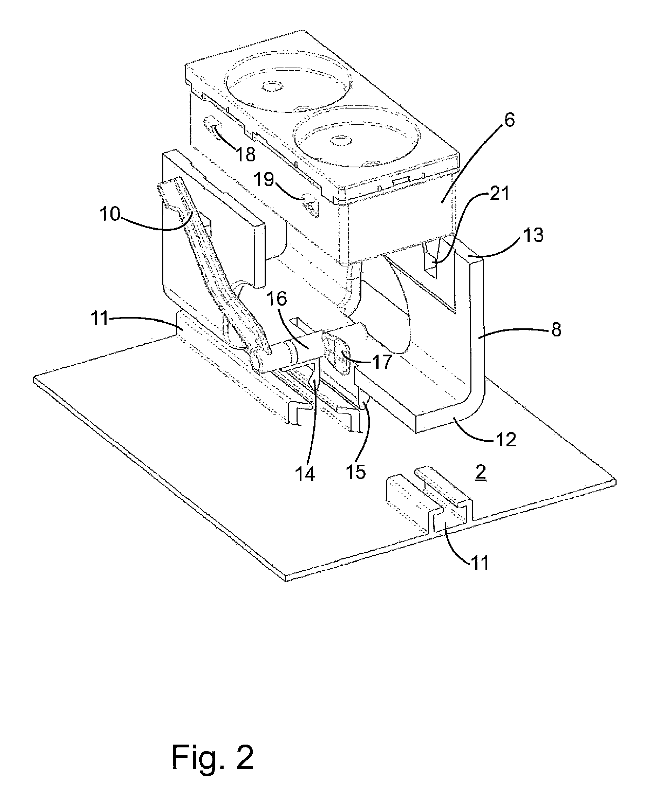

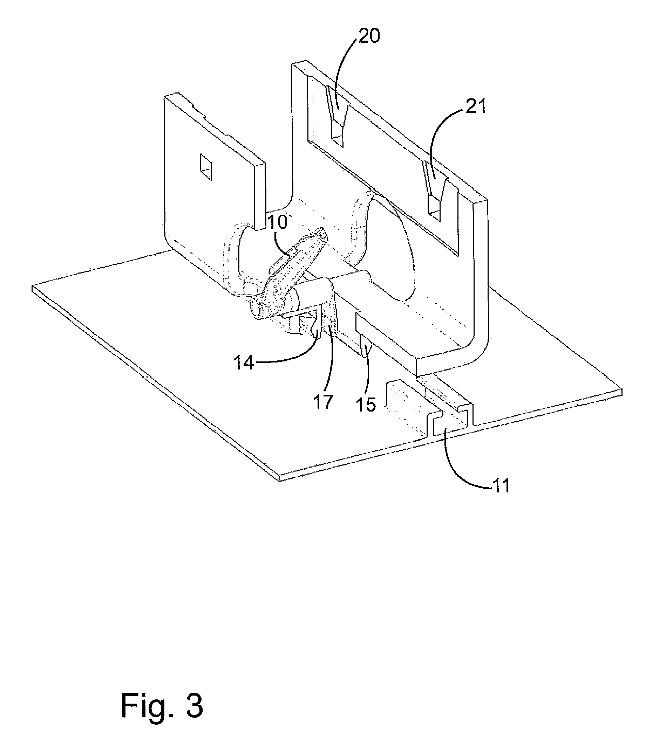

Figure 2 shows only the bottom 2 of the installation duct and the retaining rail 11 is removed in part to illustrate the arresting means in connection with the disclosures of figure 3. The holder 8 is also provided with a bottom 12 and a front 13, and on the underside of the bottom, two projecting locking beaks 14, 15 are provided that are configured for being receivable in the retaining rail 11, the locking beaks being resilient in a direction towards each other to the effect that they can be urged into the rail along a random location thereon.

In proximity of the bottom 12, a shaft 16 is journalled which is coherent with, on the one hand, a locking arm 10 and, on the other, a locking disc 17. In the position shown in figure 2 of the locking arm 10, the disc 17 has been turned to be clear of the locking beaks 14, 15, and the holder is thus in its unlocked position. The locking in place will be explained in the context of figure 3.

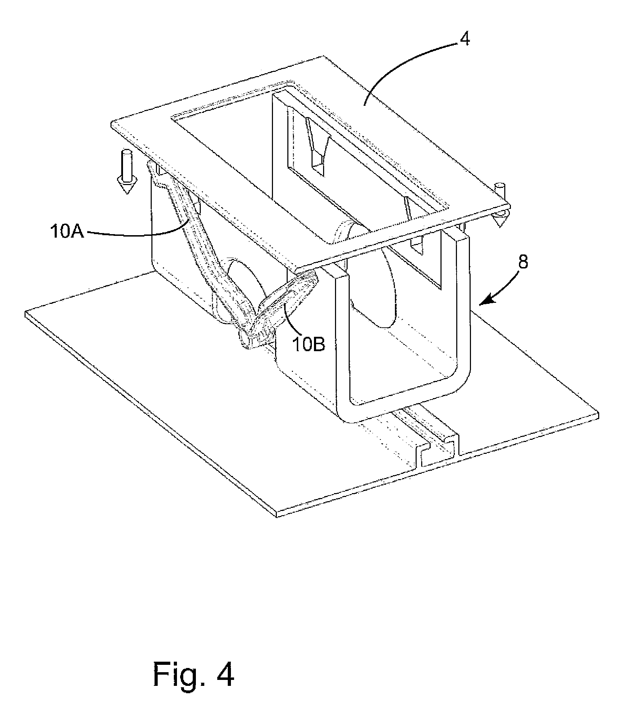

From figure 2 it will further appear that the power socket 6 is provided with a pair of locking beaks 18, 19, and corresponding locking beaks are provided on the opposite side of the power socket 6 for cooperation with locking guides 20, 21 (see figures 3 and 4). It will be understood that the power socket 6 may be connected to the holder 8 in many different ways, and it is also within the framework of the invention that the locking means 10, 16, 17 can be configured integrally with the installation material as such, such as the power socket 6. By the preferred embodiment, locking means are provided on the holder, being able to receive different types of installation material, such as power sockets, lamp sockets, etc.

Figure 3 shows the same as figure 2, but wherein the locking arm 10 has been turned to a locked position in which the locking disc 17 extends down between the resilient locking beaks 14, 15 and whereby they are strung between the inner sides of the retaining rail 11. It will be understood that the locking arm 10 may have different intermediate positions that allow the holder 8 to be displaced with a certain friction in the rail 11 to the effect that it is possible eg to adjust the position of the electrical installation material before the final locking in place is established. The friction forces may be increased by one or more of the cooperating surfaces of locking beaks and retaining rail being corrugated, provided with holes/projections or being in any other way surface-treated for increasing the friction forces. It is also within the framework of the invention that a holder may comprise two or more locking arms for securing heavy installation material or else to constitute the two outermost holders in each their end of a row of installation material that does not comprise locking means.

In principle, figure 4 shows the same as the disclosures of figures 2 and 3, but a front plate 4, see figure 1, being also shown therein. As shown by the arrows, the front plate 4 is intended for being pressed downwards towards the holder in the position shown in figure 1. In figure 4, the locking arm is shown in two positions 10A and 10B, where 10A illustrates that the arresting means are declutched, while 10B shows the locking arm in a position where the arresting means are locked. By the embodiment shown in figure 4, the locking arm 10 is dimensioned such that the locking arm 10A prevents the front plate 4 from being pressed downwards in the direction of the arrows to the position shown in figure 1. The locking arm 10 is dimensioned such that, in position 10B it does not prevent the front plate 4 from being pressed in place. Thereby measures are taken against the mounting of the installation being finished with front plates without the installation material being locked in place. It will be understood that many other ways are perceivable in which to provide cooperation and a front plate to the effect that corresponding safety measures can be provided.

During the installation work as such, the locking arm may be set in an intermediate position where, on the one hand, it safeguards against the holder 8 falling out of the retaining rail 11 and allows that the holder can be displaced in the locking rail with a certain amount of friction which can be increased or decreased depending on which position the locking arm is set to.

## Claims

1. A holder for electrical installation material, eg for a power socket (6), for mounting in an installation duct (1) that comprises a bottom (2) with a retaining profile for cooperating with a resilient locking beak (14, 15) at the bottom of the holder, said holder having fixation means that are configured for fixating the locking beak (14, 15) against resilient movement transversally of the retaining profile, **characterised in that** the holder (8) comprises a locking arm (10) which is journalled in proximity of the bottom of the holder and extends in a direction towards the front of the holder, and being connected to a locking disc (17) to the effect that, by means of the locking arm, the locking disc can be caused to occupy a position in which the locking disc blocks the resilient movement of the locking beak.

2. A holder according to claim 1, **characterised in that** the locking beak comprises an inclined face for cooperating with a respective retaining profile (11) to the effect that the locking beak is moved resiliently backwards transversally of the retaining profile when the holder is inserted in the duct; and that the locking disc (17) is configured for being inserted for abutment between a side of the locking beak that faces away from the inclined face and a stop element.

3. A holder according to claim 1 and wherein a pair of profiles is provided that constitutes a retaining rail, **characterised in that** two locking beaks (14, 15) are provided that have inclined faces that face away from each other and are configured for cooperating with each their retaining profile to the effect that the locking beaks are moved towards each other when the holder is inserted into the duct; and that the locking disc (17) is configured for being inserted for abutment between the locking beaks.

4. A holder according to claim 2 or 3, **characterised in that** the locking disc is a disc which is mounted excentrically on a shaft (16) which is pivotally journalled in proximity of the bottom of the holder and which is coherent with the locking arm.

5. A holder according to claim 4, **characterised in that** the shaft (16) extends transversally of the retaining rail when the holder is mounted in the duct.

6. A holder according to claim 5, **characterised in that** the axial expanse of the disc increases along a distance of the periphery.

7. A holder according to claims 1-6, **characterised in that** the retaining rail comprises holes for cooperation with projections on a respective locking beak.

8. A holder according to claims 1-7, **characterised in that** the retaining rail comprises projections for cooperating with holes in a respective locking beak.

9. A holder according to claims 1-8 and wherein the duct comprises a front, **characterised in that** the locking arm extends beyond the front when the arresting means are deactuated.

10. A holder according to claims 1-9, **characterised in that** the holder has two actuator arms.

11. A holder according to claims 1-10 and wherein the duct comprises a front plate, **characterised in that** the front plate is configured for cooperating with the locking arm to the effect that the front plate can be mounted only when the arresting means are actuated.

12. A holder according to claims 1-11, **characterised in that** the holder is an adaptor for receiving different types of electrical installation material.

13. A holder according to claim 12, **characterised in that** the electrical installation material is a power socket.
